# EUROPEAN PATENT APPLICATION

(11) **EP 4 102 343 A1**
(43) Date of publication of application: **14.12.2022**
(21) Application number: 21178770.0
(22) Date of filing: 10.06.2021
(51) Int. Cl.: G06F 3/0354, G06F 3/0482, G06F 3/0488, G06F 3/01

(54) **POINTING DEVICE FOR COMPUTING SYSTEM**

(71) Applicant: Loupedeck Oy, 00100 Helsinki (FI)
(72) Inventor: Seppinen, Pauli, Helsinki (FI)
(74) Representative: Aaltonen, Janne Lari Antero

(57) **Abstract**

Disclosed is a pointing device (100) for receiving user input at a computing system (102, 300). The pointing device comprises a chassis (104) comprising a radial portion (210) comprising a top-outer surface (212), and a control module (106) arranged within the chassis. The control module comprises a sensor module (108) and a touch-sensitive surface (110), wherein the sensor module is configured to receive a user indication (510). The touch-sensitive surface is configured to be operated from the top-outer surface of the radial portion. The control module is configured to determine the user indication based on a release of a user contact (506) from the touch-sensitive surface. The user indication is corresponding to a user input for the computing system.

## Description

### TECHNICAL FIELD

The present disclosure relates generally to computing systems; and more specifically, to pointing devices for computing systems.

### BACKGROUND

Computing devices are used to perform a number of operations automatically. Typically, a computing device receives an input from a user, and processes the input to generate an output. To this end, the computing device include input devices to receive such input. Examples of the input devices include, but are not limited to, keyboard, mouse, joystick, scanner, camera, microphone.

A mouse associated with a computing device is a hand-held device that controls a movement of a cursor or a pointer on a display of the computing device. In particular, the mouse detects two-dimensional motion of the mouse relative to a surface. This motion is translated into motion for the cursor or the pointer on the display and allows a control of a graphical user interface in the display of the computing device. The movement of the mouse is relative to position of the pointer shown on the graphical user interface. However, the user needs to move the mouse a longer distance or even lift up the mouse to get the pointer to move on the graphical user interface. As a result, the movement of the pointer on the graphical user interface and the mouse may not be smooth.

As may be understood, the user may employ the mouse to navigate through graphical user interface of a software application. The graphical user interface of the software application may include a number of user-selectable options, such as an icon, a thumbnail, a file, a folder, a list, a menu, a sub-menu, and the like associated with the software application. To this end, the mouse enables the user to click on a user-selectable option in the graphical user interface. Based on the clicking, the mouse enables the user to perform an operation associated with the software application, such as select, adjust, scroll, drag, manipulate, toggle, open, and so forth. In this manner, the mouse transmits the user's input to the computing device.

In an example, the software application may be a graphic editing software application. In such a case, the user may perform a task of editing using the mouse, such as by making adjustments relating to size, brightness, sharpness, contrast and the like. For example, the user may edit an image to achieve an edited image or create a digital art by navigating through menus and sub-menus provided by the graphic editing software application, using the mouse.

In recent times, advanced software applications executing a multitude of operations are used. An advanced software application may enable performing of sophisticated and complex tasks. Such advanced software application may enable the user to perform a large number of operations by providing a multitude of user-selectable options. However, navigating through such multitude of user-selectable options using a mouse to perform a desired operation becomes difficult. For example, movement of the mouse may not be translated to movement of a pointer on a graphical user interface of the advanced software application accurately. As a result, an incorrect operation may be performed on the advanced software application.

In certain cases, an advanced software application may have in-built and customizable keyboard shortcuts for performing different functions efficiently utilizing such keyboard shortcuts. However, utilizing the keyboard shortcuts to perform the desired operation requires typically a two-hand operation, comprehensive knowledge of the software application, and the required syntaxes or combinations of the keyboard shortcuts. When using keyboard shortcuts, it is typically required to move the second hand from a mouse to the keyboard that creates extra delay. Moreover, in cases where the user may utilize an incorrect keyboard shortcut, an incorrect operation may be performed. This may increase user frustration and a time associated with executing operations on the computing device. Furthermore, this may hamper user experience while using the computing device and the advanced software application.

Therefore, in light of the foregoing discussion, there exists a need to overcome the aforementioned drawbacks associated with the conventional mouse for providing user input to the computing device.

### SUMMARY

The present disclosure seeks to provide a pointing device for receiving user input at computing system. The present disclosure also seeks to provide a computing system including a pointing device. The present disclosure also seeks to provide a method for receiving a user input at a computing system. An aim of the present disclosure is to provide a solution that overcomes at least partially the problems encountered in prior art.

In one aspect, the present disclosure provides a pointing device for a computing system, the pointing device comprising:
- a chassis comprising
   - a radial portion comprising a top-outer surface, and
- a control module arranged within the chassis, the control module comprising:
   - a sensor module, and
   - a touch-sensitive surface,
wherein the sensor module is configured to receive a user indication, and the touch-sensitive surface is configured to be operated from the top-outer surface of the radial portion, wherein the control module is configured to determine the user indication based on a release of a user contact from the touch-sensitive surface, the user indication is corresponding to a user input for the computing system.

In another aspect, an embodiment of the present disclosure provides a computing system comprising:
- a display device;
- a pointing device operatively coupled to the display device, the pointing device comprising
   - a chassis comprising
      - a radial portion comprising a top-outer surface, and
      - a control module arranged within the chassis, the control module comprising:
         - a sensor module, and
         - a touch-sensitive surface,
   wherein the sensor module is configured to receive a user indication, and the touch-sensitive surface is configured to be operated from the top-outer surface,
   wherein the control module is configured to determine the user indication based on a release of a user contact from the touch-sensitive surface, and wherein the user indication corresponds to a user input; and
- a processing unit coupled to the display device and the pointing device, wherein the processing unit is configured to:
   - maintain an interfacing element corresponding to the control module over a user interface of the display device;
   - receive the user indication from the control module;
   - determine an absolute indication for the interfacing element based on the user indication, wherein the absolute indication corresponds to the user input; and
   - cause to execute an operation based on the absolute indication.

In yet another aspect, an embodiment of the present disclosure provides a method for receiving a user input at a computing system, the computing system comprising
- a display device;
- a pointing device operatively coupled to the display device, the pointing device comprising
   - a chassis and
   - a control module arranged within the chassis; and
- a processing unit coupled to the display device and the pointing device,
wherein the method comprises:
- maintaining an interfacing element corresponding to the control module over a user interface of the display device, wherein the control module comprises a sensor module and a touch-sensitive surface enabled by the sensor module to receive a user indication;
- determining the user indication based on release of a user contact from the touch-sensitive surface, wherein the user indication corresponds to a user input;
- determining an absolute indication for the interfacing element based on the user indication, wherein the absolute indication corresponds to the user input; and
- causing to execute an operation based on the absolute indication.

Embodiments of the present disclosure substantially eliminate or at least partially address the aforementioned problems in the prior art, and enable a user to reliably and conveniently provide user input to a computing system to perform a desired operation.

Additional aspects, advantages, features and objects of the present disclosure would be made apparent from the drawings and the detailed description of the illustrative embodiments construed in conjunction with the appended claims that follow.

It will be appreciated that features of the present disclosure are susceptible to being combined in various combinations without departing from the scope of the present disclosure as defined by the appended claims.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those skilled in the art will understand that the drawings are not to scale. Wherever possible, like elements have been indicated by identical numbers.

Embodiments of the present disclosure will now be described, by way of example only, with reference to the following diagrams wherein:
- FIG. 1: is a block diagram of a pointing device, in accordance with an embodiment of the present disclosure;
- FIG. 2: is a perspective view of a pointing device, in accordance with an embodiment of the present disclosure;
- FIG. 3: is a schematic illustration of a computing system, in accordance with an embodiment of the present disclosure;
- FIG. 4: is an exemplary illustration of an interfacing element, in accordance with an embodiment of the present disclosure;
- FIGS. 5A-5C: are exemplary scenarios for operation of a computing system including a pointing device for receiving a user input, in accordance with an embodiment of the present disclosure; and
- FIG. 6: is a flow chart of a method for receiving a user input at a computing system, in accordance with an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

In one aspect, the present disclosure provides a pointing device for a computing system, the pointing device comprising:
- a chassis comprising
   - a radial portion comprising a top-outer surface, and
- a control module arranged within the chassis, the control module comprising:
   - a sensor module, and
   - a touch-sensitive surface,
wherein the sensor module is configured to receive a user indication, and the touch-sensitive surface is configured to be operated from the top-outer surface of the radial portion, wherein the control module is configured to determine the user indication based on a release of a user contact from the touch-sensitive surface, the user indication is corresponding to a user input for the computing system.

In another aspect, an embodiment of the present disclosure provides a computing system comprising:
- a display device;
- a pointing device operatively coupled to the display device, the pointing device comprising
   - a chassis comprising
      - a radial portion comprising a top-outer surface, and
      - a control module arranged within the chassis, the control module comprising:
         - a sensor module, and
         - a touch-sensitive surface,
   wherein the sensor module is configured to receive a user indication, and the touch-sensitive surface is configured to be operated from the top-outer surface,
   wherein the control module is configured to determine the user indication based on a release of a user contact from the touch-sensitive surface, and wherein the user indication corresponds to a user input; and
- a processing unit coupled to the display device and the pointing device, wherein the processing unit is configured to:
   - maintain an interfacing element corresponding to the control module over a user interface of the display device;
   - receive the user indication from the control module;
   - determine an absolute indication for the interfacing element based on the user indication, wherein the absolute indication corresponds to the user input; and
   - cause to execute an operation based on the absolute indication.

In yet another aspect, an embodiment of the present disclosure provides a method for receiving a user input at a computing system, the computing system comprising
- a display device;
- a pointing device operatively coupled to the display device, the pointing device comprising
   - a chassis and
   - a control module arranged within the chassis; and
- a processing unit coupled to the display device and the pointing device,
wherein the method comprises:
- maintaining an interfacing element corresponding to the control module over a user interface of the display device, wherein the control module comprises a sensor module and a touch-sensitive surface enabled by the sensor module to receive a user indication;
- determining the user indication based on release of a user contact from the touch-sensitive surface, wherein the user indication corresponds to a user input;
- determining an absolute indication for the interfacing element based on the user indication, wherein the absolute indication corresponds to the user input; and
- causing to execute an operation based on the absolute indication.

The present disclosure provides the aforementioned pointing device for receiving a user input at a computing system, and the aforementioned computing system for receiving user input using a pointing device. The pointing device described herein allows the user to reliably provide user input. Moreover, while using e.g., editing software of presentations, graphics or music, the pointing device makes it faster and more efficient to use because there is no need to move the second hand between the mouse and the keyboard anymore. This is achieved by providing a touch-sensitive surface on the pointing device for receiving the user input. Due to this, a need of a mechanical button that activates a selection is eliminated. Elimination of the mechanical button enables cost savings in lieu of coupling of moving parts to form the mechanical button and ensures longer lifetime of the pointing device. The touch-sensitive surface of the pointing device may activate (i.e., bring back from a sleep state) the pointing device and/or the computing system on detecting a touch. Therefore, number of clicks on the pointing device, while the computing system is sleeping, is reduced.

In addition, coordinates of the touch-sensitive surface of the pointing device overlaps with coordinates of an interfacing element maintained over a user interface of a display device of the computing system. This enables the pointing device to navigate through user-selectable options in easy and fast manner. Moreover, movements of a finger of a user of the pointing device on the touch-sensitive surface are displayed in absolute manner on the display device using the high-resolution interfacing element. This enables the user to view every movement of the finger of the user on the display device. Due to this, error in selection of a user-selectable option on the user interface is substantially reduced. Moreover, the pointing device is simple to operate and robust thereby enabling easy access to a variety of selections of user-selectable options. Owing to simple and robust construction of the pointing device, battery life of the pointing device is extended.

Optionally, the interfacing element deployed over the user interface of the display device of the computing system may provide user-selectable options, for example, relating to a software application. Therefore, the user may not have to waste time searching for the user-selectable options relating to the software application on the user interface. This enables the user to use the software application to perform operations in swift and efficient manner. The pointing device and the corresponding interfacing element over the user interface enable the user to control multiple parameters within the software application swiftly. As the user-selectable options of the software application is displayed on the interfacing element corresponding to the pointing device, the user may not have to watch the pointing device for selecting a user-selectable option on the user interface. Beneficially, the user-selected options provided on the interfacing element and the pointing device enables faster and smoother operation of the software application, thereby increasing processing efficiency of the computing system.

The present disclosure provides a computing system including a pointing device for receiving user input from a user of the computing system. As would be understood, the computing system refers to an electronic apparatus that comprises a set of integrated devices that input, output, process, and store data and information. The computing system may be associated with (or used by) a user that is capable of enabling the user to perform specific tasks. In an example, the computing system may further include communication devices for transmission of data and information.

Furthermore, the computing system is intended to be broadly interpreted to include any electronic apparatus that may be used for performing certain operations and tasks, and for enabling voice and/or data communication over a wired or wireless communication network. The computing system may be implemented using a hardware, a software, a firmware, or a combination thereof. Examples of the computing system include, but are not limited to, desktop computer, laptop computer, cellular phone, personal digital assistant (PDAs), handheld device, wireless modem, gaming console, gaming device, virtual reality (VR) device, home automation system, IoT control system, home assistant system, smart refrigerator etc. In an example, the computing system may also include a virtual computing system.

The computing system includes a processing unit coupled to a display device and a pointing device (as discussed in detail later, herein) of the computing system. The processing unit is configured to perform tasks and operations associated with the computing system. The processing unit refers to programmable and/or non-programmable components configured to execute one or more software application for storing, processing and/or sharing data and/or set of instruction. Optionally, the processing unit can include, for example, a component included within an electronic communications network. Additionally, the processing unit includes one or more data processing facilities for storing, processing and/or share data and/or set of instruction. Furthermore, the processing unit includes hardware, software, firmware, or a combination of these, suitable for storing and processing various information and services accessed by the user using the computing system. Optionally, the processing unit may include functional components, for example, a processor, a memory, a network adapter and so forth.

The computing system includes a display device. The display device may correspond to an output device of the computing system. Specifically, the display device includes a display screen and associated circuitry, wherein an output of the computing system is provided to the user via the display screen. In an example, output data or information, such as text, numbers, or graphic content, may be projected on the display screen. Examples of the display screen may include, but are not limited to, Cathode ray tube (CRT) display, liquid crystal display (LCD), light-emitting diode (LED) display, gas plasma display, Organic LED (OLED) display, and the like. It may be noted that the computing system may include other output devices, for example, speaker, printer, projector, headphone, GPS, sound card, video card, and the like.

The computing system includes one or more input devices for receiving input from the user of the computing system. An input device may be used by the user to provide input, such as data or control signals, to the processing unit of the computing system. Examples of the input devices include, but are not limited to, keyboard, mouse, touchpad, joystick, scanner, light pen, track ball, microphone, optical character reader, bar code reader, and the like.

Pursuant to embodiments of the present disclosure, the computing system includes a pointing device. To this end, the pointing device is an input device. The pointing device may be communicably and operatively coupled to other devices, such as the processing unit and the display device of the computing system.

In an embodiment, the pointing device may be a separate device that is coupled to the computing system, specifically, the processing unit of the computing system. The pointing device may be coupled to the computing system by way of a wired or wireless communication means. In an example, the pointing device may be coupled to the processing unit via Bluetooth (BT), or Wireless LAN (WLAN). For example, the pointing device may be coupled with any type of computing device, such as a desktop, a laptop, a remote server, or electronic device, such as a drawings table, a touch pad, a home automation device, and the like.

In another embodiment, the computing system may include the pointing device. In the present example, the pointing device may be integrated with the computing system as, for example, a trackpad or touchpad, to facilitate user interaction with the associated computing system. The pointing device may be used with the computing system in place of, or in addition to, a mouse pointing device. Optionally, the pointing device may be implemented as an auxiliary touch-sensitive screen of the computing system. In an example, such pointing device may be implemented as integrated pointing devices for laptop computing devices, notebook computing devices and netbook computing devices. In another example, the pointing device may also be implemented as a non-integrated device that is coupled (e.g., as a peripheral device) to a computing device, such as a desktop computing device or a server computing device, as some examples. The trackpad-based pointing device may also be implemented in other devices as well.

The pointing device includes a chassis. The chassis may form an enclosure or housing for components of the pointing device. In an example, the chassis may also provide protective covering to the components of the pointing device. For example, the chassis of the pointing device may be manufactured using polymeric material and/or metal.

In an example, a shape of the chassis may be substantially elliptical or egg-like. In another example, the shape of the chassis may be disco-rectangle or obround. Optionally, the chassis may have a flat base, wherein components of the pointing device may be arranged on the base. The base of the chassis may have a pair of longitudinal edges and a pair of lateral edges. Moreover, the chassis may include a pair of longitudinal sides extending from the pair of longitudinal edges of the base and a pair of lateral sides extending from the pair of lateral edges of the base. The chassis may further have a top surface, opposite to the base.

Furthermore, the chassis of the pointing device includes a radial portion. The radial portion comprises a top-outer surface. In an example, the top surface of the chassis may be divided into a first side and a second sides by a lateral axis passing along a centre of the longitudinal side perpendicular to the longitudinal side of the chassis. For example, the first side may be recessed with respect to the second side. To this end, the radial portion of the chassis may be provided at the recessed first side of the chassis, wherein the radial portion may protrude from the recessed first side. In an example, the radial portion may be spaced from edges of the top surface corresponding to the first side. In an example, the radial portion of the chassis may be cylindrical, spherical, and the like. In another example, the portion of the chassis may be non-radial, for example, cuboidal, cubical, conical, pyramidal, elliptical, and the like.

Optionally, the raised second side of the chassis may provide a palm-rest area to a user of the pointing device. In other embodiments of the present subject matter, the radial portion may be provided at a centre of the top surface.

Furthermore, the pointing device includes a control module arranged within the chassis. The *"control module"* refers to a computational element that is operable to respond to and processes instructions that drive the computing system. Optionally, the control module includes, but is not limited to, a microprocessor, a microcontroller, a complex instruction set computing (CISC) microprocessor, a reduced instruction set (RISC) microprocessor, a very long instruction word (VLIW) microprocessor, or any other type of processing circuit. For example, the control module may include one or more individual processors, processing devices and various elements associated with a processing device that may be shared by other processing devices. In such a case, the one or more individual processors, processing devices and elements are arranged in various architectures for responding to and processing the instructions that drive the pointing device.

The control module includes a sensor module. Notably, the sensor module refers to an electronic device for sensing physical quantities. Pursuant to embodiments of the present disclosure, the sensor module is employed to sense a touch on the pointing device. Specifically, the sensor module may include a number of sensor devices, wherein the sensor devices may sense a user contact or user touch on the radial portion of the pointing device. More specifically, the sensor module operates to sense the user contact and track movement of a user's finger on the radial portion.

In an example, the sensor module may include a tactile sensor and/or a touch sensor to sense the user contact. For example, the touch sensor may be a capacitive touch sensor or a resistive touch sensor. Moreover, the sensor module may include other sensor devices. Optionally, the sensor module comprises at least one of selected from: a tactile sensor, a touch sensor, a key-switch, a slider encoder, an accelerometer, a gyro sensor, a voice recognition sensor, a haptic sensor, a piezo electric sensor, a vibrator. It may be noted that the user may touch the radial portion of the pointing device to perform certain operations or create commands on the computing system. In this manner, the user may provide a user input to the computing system. Beneficially, the sensor module provided on the pointing device enables faster and smoother operation of the software application, thereby increasing processing efficiency of the computing system.

The control module includes a touch-sensitive surface. The touch-sensitive surface defines an input region that is sensitive to and/or is operated by the user contact. For example, the touch-sensitive surface may include an optical glass layer or a flexible polyester layer. Optionally, the touch-sensitive surface of the control module may be implemented using the sensor module. More optionally, the touch sensor or the tactile sensor of the sensor module may implement the touch-sensitive surface. In addition, the touch-sensitive surface may be implemented by the control module and a software driver of the pointing device.

Pursuant to present disclosure, the touch-sensitive surface is aligned with the radial portion of the chassis. For example, the touch-sensitive surface may be disposed below or under the top-outer surface of the radial portion of the chassis. Subsequently, the touch-sensitive surface may be operated from the top-outer surface of the radial portion. For example, the control module may employ the sensor module, specifically, the touch sensor to implement the touch-sensitive surface. Moreover, the control module may sense a user contact on the touch-sensitive surface and convert it into signals. The signals may be provided to the processing unit, wherein the signals may be processed by the processing unit of the computing system executing the software driver. Subsequently, the processing unit may interpret the signals corresponding to user contact in order to receive a user input.

Although in the present disclosure, the radial portion of chassis and the underlying touch-sensitive surface is provided on a top of the pointing device, such as protruding from the top surface of the chassis. However, such location of the radial portion and the touch-sensitive surface should not be construed as limiting in any way. In other embodiments of the present subject matter, the radial portion of the chassis and the underlying touch-sensitive surface may be provided at a side of the pointing device, such as on the longitudinal sides of the pointing device. In such a case, the touch-sensitive surface may be operated by a side outer surface along the longitudinal side of the pointing device.

In an example, the computing system is configured to maintain an interfacing element corresponding to the control module. In particular, the interfacing element corresponding to the control module of the pointing device is maintained on the display device of the computing system. To this end, the interfacing element of the pointing device may be maintained over a user interface displayed on the display screen of the display device. For example, the interfacing element may be maintained over the user interface by executing the software driver of the pointing device by the processing unit of the computing system.

As used herein, *"user interface (UI)"* relates to a structured set of user interface elements rendered on the display screen. Optionally, the UI rendered on the display screen is generated by any collection or set of instructions executable by the processing unit of the computing system. Additionally, the UI is operable to interact with the user of the computing system to convey graphical and/or textual information and receive input from the user. In an example, the UI used herein is a graphical user interface (GUI). Furthermore, the user interface (UI) elements may be visual objects that have a size and position in the UI. A UI element may be visible, though there may be times when a UI element is hidden. Examples of a UI element include, but are not limited text blocks, labels, text boxes, list boxes, lines, and images windows, dialog boxes, frames, panels, menus, buttons, icons, etc. In addition to size and position, a UI may have other properties, such as a layout, design, theme, margin, spacing, and the like.

Furthermore, the interfacing element refers to a graphical image that is used to activate or control certain elements, such as the UI elements in the user interface. The interfacing element may provide an indicator to show a current position of user interaction on the user interface displayed on the display screen. In an example, the interfacing element is a wedge-shaped icon overlaid on the user interface.

Optionally, the computing system is further configured to:
- scale coordinates of the interfacing element based on coordinates of the touch-sensitive surface; and
- maintain the interfacing element over a user interface of the computing system.

Optionally, in this regard, the processing unit of the computing system may map the coordinates of the interfacing element to the coordinates of the touch-sensitive surface. For scaling, each point on the interfacing element may be assigned a scale comparable to a corresponding point on the touch-sensitive surface. Moreover, each point on the interfacing element may have a corresponding point on the touch-sensitive surface, wherein a ratio of a size of a point on the interfacing element to a size of a corresponding point on the touch-sensitive surface is uniform for all of the points on the interfacing element. Subsequently, the scaled coordinates of the interfacing element are maintained, i.e., displayed over the user interface displayed on the display screen of the computing system. Beneficially, such scaling of the coordinates of the interfacing element enables receiving of an accurate and precise user-input from the touch-sensitive surface making the use of a software application faster, increasing processing efficiency of the computing system.

In an example, the interfacing element displayed on the display screen may be on a 1:1 scale with respect to the touch-sensitive surface. In another example, the interfacing element may be scaled down with respect to the touch-sensitive surface when a size of the interfacing element is smaller than a size of the touch-sensitive surface. In yet another example, the interfacing element may be scaled up with respect to the touch-sensitive surface when a size of the interfacing element is larger than a size of the touch-sensitive surface.

As would be understood, the user interface displayed on the display screen of the computing system may correspond to a software application. The term *"software application"* refers to a software utility tool designed to perform pre-determined and coordinated functions, tasks, or activities based on commands provided by the user. The software application provides a given set of services (for example, such as, image editing, video editing, audio editing and the like) for the benefit of the user. Example of the software application includes, but are not limited to, an image editing tool, a video editing tool, an audio editing tool, and an automation system. It will be appreciated that the commands provided by the user are based on a context of the at least one software application.

In operation, the sensor module is configured to receive a user indication. In this regard, the touch sensor of the sensor module may identify a user contact on the touch-sensitive surface. In particular, the touch-sensitive surface is configured to be operated from the top-outer surface of the radial portion. Subsequently, the user may place their finger on the top-outer surface to make a user contact in order to provide the user indication.

The control module is configured to determine the user indication based on a release of the user contact from the touch-sensitive surface. In particular, the user indication corresponds to a user input for the computing system. Pursuant to present subject matter, the user may make contact with the touch-sensitive surface, wherein such contact is identified by the sensor module as the user contact. Further, the control module determines the user indication corresponding to the user contact when the user removes their finger from the touch-sensitive surface, i.e., un-touches the touch-sensitive surface.

Optionally, the user indication may be provided to the processing unit of the computing system in form a of a signal. For example, the user indication may correspond to a selection, wherein the selection may be the user input for the computing system. To this end, the user indication may have an associated operation, wherein the operation may be provided by the computing system. In an example, the user indication is a touch input or a gesture input. Herein, a movement of the one finger, two fingers, three fingers, four fingers, etc. may express an associated operation. The gesture input may be a specific action performed by the user on the touch-sensitive surface to perform an operation associated with a given gesture. In an example, the gesture input may be provided by the user by forming a triangle using his finger on the touch-sensitive surface. In such example, the control module may execute the operation associated with such gesture. Examples of the gesture input may include, but are not limited to, swiping left, right, up, down using one or more fingers on the touch-sensitive surface, forming a predefined shape using one or more fingers on the touch-sensitive surface, tapping the touch-sensitive surface for a predefined number of taps using one or more fingers.

Optionally, a deactivated state of the interfacing element may be maintained over the user interface on the display screen before sensing a user contact on the touch-sensitive surface. The deactivated interfacing element may indicate a location of the interfacing element on the display screen. In an example, the processing unit of the computing system may activate the deactivated interfacing element on receiving the signal corresponding to the user contact at the touch-sensitive surface. Optionally, the deactivated interfacing element may be a logo, an icon, a line drawing, and the like. More optionally, the deactivated interfacing element may have a circular shape, wherein a quarter portion of the circle may be cut-off. Beneficially, such deactivation of the interfacing element and reactivation only upon sensing user contact ensures that the pointing device is only used when required, thereby conserving energy. Furthermore, the processing unit may employ the processing power required for processing the user inputs from the pointing device to other tasks for the time when the interfacing element is deactivated.

Optionally, the interfacing element is configured to provide a set of user selectable options when activated. In an example, the interfacing element may be enlarged so as to display the set of user selectable options within a boundary of the interfacing element. In addition, the interfacing element may include and/or display a pointer on the enlarged interfacing element corresponding to a location of the user contact. The pointer may maintain a reference of a point of contact of the user's finger on the touch-sensitive surface with respect to the interfacing element. In an example, the set of user selectable options within the interfacing element may be displayed as a text, an icon, a picture, a link, a shortcut, or a combination thereof. Furthermore, the set of user selectable options provided within the interfacing element may be predefined, i.e., default, or user defined.

As may be understood, a software application may include a number of shortcuts to implement functionalities (or commands) associated therewith. To such an end, remembering all the shortcuts associated with the software application may be difficult, and further implementing them would be prone to errors. In an example, a user may recall a shortcut incorrectly, thereby making implementation of the shortcuts slower and tiresome.

The pointing device of the present subject matter provides the interfacing element that includes the set of user selectable options displayed on the user interface of a software application. Such interfacing element enables easy access to a wider list of user selectable options associated with the software application to execute a large number of commands with fewer clicks (or taps) on the pointing device. Moreover, as there is less movement of the pointer over the interfacing element or the user interface of the display device, less data communication is required between the pointing device and the processing unit of the computing system. This enhances speed of the pointing device in identifying user indication or input provided by the user, thereby enhancing overall speed of the computing system. Due to faster speed of execution of commands on the software application, power savings may be achieved at the computing system. In addition, due to faster operation of the pointing device, battery usage of the pointing device may be optimized. Such power saving at the computing system as well as the pointing device may further provide cost savings during operation of the computing system.

In an example implementation, the display device may be an OLED or an AMOLED display device. In such a case, the interfacing element displayed on the user interface of the software application may have a black or dark background. Furthermore, the set of user selectable options provided on the interfacing element may have a colour, such as red, white, yellow, and the like, contrasting to black. Such black background of the interfacing element may further save display power, leading to further power saving of the computing system.

In an example, the processing unit may cause the interfacing element to transition from the activated state to the deactivated state after a predefined threshold. In particular, the interfacing element may transition to the deactivated state after inactivity, or no user contact, on the touch-sensitive surface for a pre-defined period of time. Beneficially, such deactivation of the interfacing element ensures that the pointing device is only used when required, thereby conserving energy. Furthermore, the processing unit may employ the processing power required for processing the user inputs from the pointing device to other tasks for the time when the interfacing element is deactivated.

As explained above, the interfacing element may overlay on a user interface of a software application. To this end, the set of user selectable options provided by the interfacing element may be associated with the software application on which the interfacing element is displayed. Each of the set of user selectable options may correspond to an application-specific operation associated with the software application. In an example, each of the set of user selectable options provided by the interfacing element may be in shape of a pie within a circular boundary. In another example, the set of user selectable options provided by the interfacing element may correspond to top, bottom, left and right buttons within a circular boundary, wherein such buttons may be circular, square, cuboidal, and the like. Optionally, the software application may be executed by the processing unit to provide a corresponding user interface on the display screen.

In an example, a user may switch from a first software application to a second software application. Consequently, a first user interface of the first software application may be displayed on the display screen during a first time period and a second user interface of the second software application may be displayed on the display screen during a second time period. In such a case, the interfacing element may be maintained on the first user interface as well as the second user interface. When the interfacing element is displayed over the first user interface during the first time period, the interfacing element may provide a set of user selectable options associated with the first software application. When the interfacing element is displayed over the second user interface during the second time period, the interfacing element may provide a set of user selectable options associated with the second software application. To such an end, a set of user selectable options provided by the interfacing element may change based on a software application on which the interfacing element is maintained. Accordingly, the set of user selectable options associated with the software application enables the user to control, manipulate, and/or perform operations on the software application.

In an example, the interfacing element may be maintained over a user interface associated with an image editing software application. In such a case, a set of user selectable options provided by the interfacing element may include, but are not limited to, an adjustment control, for example, exposure, brightness, contrast, highlight, saturation, ambiance, shadow, warmth, structure, sharpening, colour, and the like. Moreover, the user selectable options provided by the interfacing element may also include, for example, a file, a folder, an action, a shortcut, an, a widget, and so forth. The interfacing element may be circular, wherein the set of user selectable options may be provided within pie of the circle.

Optionally, the computing system is configured to:
- determine an absolute indication for the interfacing element based on the user indication, wherein the absolute indication corresponds to the user input; and
- cause to execute an operation based on the absolute indication.

Optionally, in this regard, the processing unit of the computing system may determine a location of user indication or user contact at a time of release of the user contact on the touch-sensitive surface. In an example, coordinates of the location of the user indication may be determined and scaled with respect to scaling ratio of the interfacing element. Furthermore, the scaled coordinates of the location of the user indication may be mapped to coordinates of the interfacing element to determine a location on the interfacing element corresponding to the user indication. Such location on the interfacing element may correspond to the absolute indication for the interfacing element. After determining the absolute indication for the interfacing element, the processing unit of the computing system may cause the processing unit to execute an operation or action associated the absolute indication. Thereafter, the processing unit may execute a predefined set of commands faster to perform the operation or action associated with the absolute indication. Beneficially, executing such predefined set of command may require lesser processing resources and therefore, may be processed in a faster manner.

Optionally, the processing unit is further configured to:
- transform the user contact at the touch-sensitive surface into absolute movement across the interfacing element based on the scaling; and
- cause the display device to display the absolute movement.

Optionally, in this regard, the processing unit may be configured to continuously determine absolute movement of the pointer on the interfacing element during movement of the user's finger on the touch-sensitive surface. In this regard, the processing unit may transform the user contact or movement of the user's finger on the touch-sensitive surface based on a location of a user contact and the scaling ratio. Subsequently, the processing unit may determine the absolute movement of the pointer across the interfacing element. In this manner, movement of the user's finger on the touch-sensitive surface is continuously displayed with respect to the interfacing element in form of absolute movement. Such continuous display of the movement of user's finger allows the user to continuously track the movement in an efficient manner, thereby reducing an amount of effort required to operate the pointing device and making functioning thereof simpler, faster and more energy efficient.

Furthermore, optionally, the processing unit is further configured to:
- scale coordinates of each of the set of user selectable options provided by the interfacing element based on coordinates of the touch-sensitive surface; and
- transform the user indication into the absolute indication for the interfacing element based on the scaling.

Optionally, in this regard, the processing unit of the computing system may assign a scale to each point on the interfacing element that is comparable to a corresponding point on the touch-sensitive surface. Moreover, each point on the interfacing element may have a corresponding point on the touch-sensitive surface, wherein a ratio of a size of a point on the interfacing element to a size of a corresponding point on the touch-sensitive surface is uniform for all of the points on the interfacing element. Furthermore, the processing unit may map points associated with a user selectable option with corresponding points on the touch-sensitive surface. Subsequently, coordinates of the interfacing element associated with the user selectable option is mapped to corresponding coordinates on the touch-sensitive surface.

Thereafter, the processing unit may transform the user indication into the absolute indication for the interfacing element based on the scaling. It may be noted that the user indication may correspond to one of the set of user selectable options. In an example, coordinates of a location of the user indication may be transformed based on a scaling ratio of the interfacing element. Moreover, the coordinates of interfacing element corresponding to the coordinates of the user indication, to determine the absolute indication for the interfacing element. Moreover, a user selectable option corresponding to the coordinates of the interfacing element may be determined to identify the user input for the computing system. It may be noted that the user selectable option may correspond to an operation or an action, wherein such operation or action is executed by the processing unit after determining the absolute indication and the user selectable option.

Optionally, the processing unit of the computing system may enable the user of the computing system to configure and/or re-configure the set of user selectable options provided by the interfacing element. In an example, the processing unit may receive configuration information pertaining to the interfacing element. For example, the configuration information may define a selection of a set of user selectable options to be provided corresponding to a software application. In addition, the configuration information may define a selection of other properties of the interfacing element, such as layout, design, colour, shape, size, location, and so forth. Based on the configuration information received from the user, the processing unit may re-configure the interfacing element to provide the selected set of user selectable options provided by the user. For example, the processing unit may employ and/or execute the software driver of the pointing device to re-configure the interfacing element.

More optionally, the processing unit is further configured to:
- receive a selection of a new action associated with a user selectable option of the interfacing element, wherein the new action is different from an old action associated with the user selectable option; and
- re-configure the user selectable option of the interfacing element based on the received selection.

Optionally, in this regard, the user may define the selection of the new action for the user selectable option under consideration. The new action may correspond to a new operation that is different from an old operation that was performed based on the old action. Thereafter, the user selectable option of the interfacing element may be re-configured based on the received selection of the new action for the user selectable option. In an example, an old action corresponding to a user selectable option of *'send'* may include sending a document to a sender A. Furthermore, a new action corresponding to the user selectable option of *'send'* may include sending the document to a sender B.

The selection of a user selectable option provided by the interfacing element may be performed by the user, using the pointing device. In this regard, the user may select the desired user selectable option by moving their finger on the touch-sensitive surface, i.e., over the top-outer surface of the radial portion. The user may select the desired user selectable option provided by the interfacing device by moving the user's finger, and therefore, the pointer within the interfacing element, to the user selectable option, and releasing user contact from the touch-sensitive surface or untouching the touch-sensitive surface. Owing to high resolution of the interfacing element, the user may not need to un-touch the touch-sensitive surface to be able to reach the boundary of the interfacing element. Moreover, the radial portion of the pointing device is 100% scaled to the interfacing element thereby enable absolute movement across the interfacing element based on movement of the user's finger.

The pointing device of the present subject matter is configured to receive a selection of a set of new user-selectable options, wherein the user-selectable options have associated actions. The user-selectable options make it easier for a user of the computing system to use e.g., a software application. In particular, the interfacing element and the pointing device enables the user to perform less movement of the pointer over the interfacing element or the user interface of the display device. Further, less data communication is required between the pointing device and the processing unit of the computing system due to less movement. This enhances overall speed of the computing system. Due to faster speed of execution of commands on the software application, power savings may be achieved at the computing system.

Optionally, the control module is configured to provide a haptic feedback to the user via the touch-sensitive surface. As may be understood, haptic feedback refers to a mode of communication of a feedback to a user by way of touch. To this end, the control module may provide haptic feedback to the user using, for example, vibration, pressure, temperature, and the like.

In an example, invisible sector lines may be defined on the touch-sensitive surface of the pointing device, wherein the touch-sensitive surface is provided below the radial portion. Moreover, one or more haptic sensors may be provided along the sector lines in order to provide haptic feedback along the defined sector lines. Examples of the haptic sensor include, but are not limited to, piezoelectric actuators, linear resonant actuator (LRA), vibrator, air vortices, ultrasound transducers, and the like. For example, a number of haptic sensors used for providing the haptic feedback may be in a range of 1 to 1000. Based on a number of haptic sensors provided within the pointing device, a type, an intensity and conditions of the haptic feedback may be varied.

In an example, a haptic feedback may be provided to the user to indicate the sector lines. In another example, a haptic feedback may be provided to the user when the user's finger moves outside of a first user selectable option or into a second user selectable option, wherein the first and the second user selectable option are provided by the interfacing element. In yet another example, a haptic feedback may be provided to the user when the user's finger moves to a boundary of the radial portion, wherein the boundary of the radial portion may not correspond to any user selectable option and may be outside of a region defined by the interfacing element. In yet another example, a haptic feedback may be provided to the user just before the user releases contact from the touch-sensitive surface to indicate receival of a user indication. For example, such haptic feedback is provided to the user in real-time based on movement of the user's finger on the radial portion. Notably, such haptic feedbacks provided to the user simplifies and makes faster an operation of the pointing device, builds reliability with the user and enhances overall user-experience, in an example, noticing borders of a user interface visually on the display and at the same time feeling user interface borders on the pointing device. Thereby the haptic feedback increases efficiency of the computing system.

The haptic feedback gives the user a sense of control over the pointing device in real-time by letting the user know about different user indication received by the pointing device. In particular, the haptic feedback by the pointing device provides tactile feedback on every (virtual) button press, i.e., user indication, thereby giving instant confirmation of an action. Due to the haptic feedback, the user may not have to take eyes off the display screen displaying the user interface to check if correct button is being pressed. The haptic feedback is provided in a localised manner to indicate the identified user indication accurately. In an example, the processing unit enables the user to easily configure set of user selectable options, actions, haptic feedback, layout, and other properties of the interfacing element in the beginning or during use. In an example, a configuration of the interfacing element may be set to *'default',* wherein the interfacing element may be for all software applications. In another example, a configuration of the interfacing element may be set to *'application specific',* wherein the interfacing element may be different for different software applications on the computing system. In yet another example, a configuration of the interfacing element may be set to *'user specific',* wherein the interfacing element may be different for different users of the computing system. In yet another example, a configuration of the interfacing element may be set to *'hidden',* wherein the user interface is displayed on the display screen without the interfacing element, but the interfacing element may still be controlled by the pointing device. In yet another example, a configuration of the interfacing element may be set to *'auto',* wherein the interfacing element may be re-configured dynamically in automated manner based on, for example, user interaction with different software applications, user's behaviour, frequent operations performed on the computing system, and the like.

Optionally, the processing unit is further configured to:
- receive a selection of a set of user-selectable options from a plurality of user selectable options for the interfacing element, wherein each of the plurality of user selectable options have an associated action;
- receive a selection of a haptic feedback rule from a plurality of haptic feedback rules for the interfacing element;
- receive a selection of a layout of the interfacing element from a plurality of layouts for the interfacing element; and
- re-configure the interfacing element based on the received selection.

Optionally, in this regard, the processing unit enables the user to easily configure or personalize the interfacing element. In an example, the processing unit may enable the user to select a set of user selectable options from a plurality of user selectable options. Such plurality of user selectable options may be specific to a software application. Moreover, each of the plurality of user selectable options may have an associated action, wherein such action is executed on the software application. Furthermore, the processing unit may re-configure the interfacing element based on received selection of the set of user selectable options. For example, the processing unit creates a user profile, wherein the user profile associates a user of the computing device with a unique user identifier. In such a case, the processing unit may further store the set of user selectable options selected by the user in association with the user profile. Subsequently, a user may select a user profile to implement selections associated with the user profile.

In another example, the processing unit may enable the user to select a haptic feedback rule from a plurality of haptic feedback rules for the interfacing element. Herein, haptic feedback rule refers to a set of rules pertaining to providing a haptic feedback to the user via the touch-sensitive surface. In an example, the haptic feedback rule may be specific to operations of a particular software application. For example, the haptic feedback rule may define a different intensity of haptic feedback or vibration corresponding to different UI elements, a different buzzing sound of the vibration corresponding to different UI elements, a different buzzing sound of the vibration corresponding to a direction of movement of the user's finger on the touch=sensitive surface of the pointing device, and so forth.

In an embodiment, the software application may be an image editing software application, wherein a haptic feedback is provided as a different intensity of vibration. In an example, the haptic feedback rule may define different intensity of vibration for different adjustment controls of the image editing software application. In another example, the haptic feedback rule may define different intensity of vibration for different level of adjustments on an adjustment slider corresponding to adjustment controls of the image editing software application. Such adjustment controls may correspond to, for example, brightness, exposure, contrast, and so forth

To this end, the user may select a predefined haptic feedback rule from a plurality of predefined haptic feedback rules associated with the software application. Subsequently, the processing unit may re-configure the interfacing element and the pointing device based on the selected predefined haptic feedback rule to provide a haptic feedback as defined in the selected haptic feedback rule. Alternatively, the user may define a new haptic feedback rule based on a set of user selectable options provided by the interfacing element. Accordingly, the processing unit may re-configure the interfacing element and the pointing device based on the new haptic feedback rule to provide a haptic feedback as defined in the new haptic feedback rule.

In yet another example, the processing unit may enable the user to select a layout of the interfacing element from a plurality of layouts for the interfacing element. The plurality of layouts may include different properties of the interfacing element. Such different properties of the interfacing element may be based on, for example, colour, size, shape, theme, design, font, margin, spacing, arrangement, and so forth. In certain cases, the layout of the interfacing element may be specific to a software application. Furthermore, the processing unit may re-configure the interfacing element based on received selection of the layout. Alternatively, the processing unit may enable the user to create a new layout for the interfacing application.

The pointing device of the present subject matter provides the set of user-selectable options, haptic feedback reception rules and selection of layouts of the interfacing element. Moreover, as there is less movement of the pointer over the interfacing element or the user interface of the display device, less data communication is required between the pointing device and the processing unit of the computing system. This enhances speed of the pointing device in identifying user indication or input provided by the user, thereby enhancing overall speed of the computing system. Due to faster speed of execution of commands on the software application, power savings may be achieved at the computing system.

Optionally, the pointing device further includes at least one button configured to realign the interfacing element in a pre-defined manner on triggering the at least one button. In an example, the at least one button may be provided along the longitudinal sides and/or lateral sides of the chassis of the pointing device. Further, the at least one button may be a touch-based button, a conventional pressure-based button, a piezo-type button, or vibrator element.

More optionally, a button provided at a longitudinal side of the pointing device may be a *'HOME'* button. In an example, when the *'HOME'* button is actuated, the pointer provided on the interfacing element may go to a home position. For example, the home position of the pointer may be at a centre of the interfacing element, a centre of the display screen, or a specified location within the user interface. In another example, when the *'HOME'* button is actuated, the processing unit may cause the interfacing element to transition to the deactivated state, wherein in the deactivated state a logo or an icon may be displayed at a home position. For example, the home position may be a pre-defined location on the display screen, wherein such home position may be specific to a software application in use. Notably, providing such button on the pointing device provides an increased control to the user over the interfacing element, thereby ensuring a personable, easier, faster and enhanced user-experience, at the same time increasing efficiency of the computing system.

Furthermore, optionally, a button provided at a longitudinal or lateral side of the pointing device may be an *'ACTIVATE'* button. In an example, when the *'ACTIVATE'* button is actuated, the interfacing element of the pointing device may be actuated at a location corresponding to the pointer on the display device. For example, the location of the pointer may be anywhere on the display device of the computing system, specifically, within the user interface displayed on the display device of the computing system. In particular, when the *'ACTIVATE'* button is actuated, the processing unit may cause the pointer within the user interface to transition into the interfacing element, i.e., the activated state, wherein in the activated state the interfacing element may include or display a plurality of user-selectable options. For example, the plurality of user-selectable options may be a pre-defined, and may be specific to a software application in use. Notably, providing such button on the pointing device enables the user to find the user-selectable options, i.e., menu selection for the software easily, thereby saving time and effort. This further saves power of the computing system and due to less number of clicks associated with the pointing device, battery of the pointing device may be saved.

More optionally, in an example, an 'ACTIVATE' button may be provided at a longitudinal or lateral side of a conventional pointing device. In the present case, the conventional pointing device refers to a computer mouse. As may be understood, the computer mouse may include one or more buttons to allow operations such as selection of a menu item on the display device. The computer mouse may further include other elements, such as touch surfaces and scroll wheels, which enable additional control and dimensional input. Moreover, the computer mouse may maintain a pointer or cursor on the display device.

In the present example, when the *'ACTIVATE'* button is actuated, an interfacing element may be actuated at a location corresponding to the pointer on the display device. In particular, when the *'ACTIVATE'* button is actuated, the processing unit may cause the pointer within the user interface to transition into the interfacing element, i.e., activated state. As mentioned previously, the activated state of the interfacing element may include or display a plurality of user-selectable options. For example, the plurality of user-selectable options may be pre-defined, and may be specific to a software application in use.

Returning to the present example, the interfacing element may be positioned at a specified location on the user interface. Moreover, a shape of the interfacing element may be, for example, circular, square, triangle, etc. For example, the user may be able to drag, adjust and re-configure the interfacing element to change, for example, a layout, shape, size, location, and the like of the interfacing element, or hide the interfacing element. In addition, a location of the interfacing element may change based on a software application on which the interfacing element is displayed. Furthermore, a resolution of the interfacing element may be, for example, 225x225 pixels, 256x256 pixels, 325x325 pixels, or 425x425 pixels.

For example, if the pointer of the interfacing element moves towards the interfacing element from outside, in such a case, if the interfacing element is displayed over a UI element of the user interface, then the interfacing element may be hided or collapsed into the deactivated state to provide better visibility to the user. In another example, the interfacing element may be hided or collapsed into the deactivated state if the pointer is stationary or working within the interfacing element for a pre-defined period of time without receiving any user indication. In yet another example, the interfacing element may be hided or collapsed into the deactivated state when the user is taking a screenshot of the user interface.

Due to high resolution of the interfacing element, the user may view movement of the user's finger with respect to the interfacing element accurately. Subsequently, errors due to selection of an incorrect option is substantially reduced. Furthermore, multitude of user selectable options may be displayed within the interfacing element. As a result, the user may not have to search for a desired user selectable option on the user interface to perform a desired operation. Therefore, the user may use the software application displayed on the display screen to perform desired operation speedily and swiftly. Moreover, the user may be able to perform a number of operations instantaneously.

The present disclosure also relates to the method as described above. Various embodiments and variants disclosed above apply *mutatis mutandis* to the method.

Optionally, determining the absolute indication for the interfacing element comprises:
- scaling coordinates of the interfacing element based on coordinates of the touch-sensitive surface; and
- transforming the user indication into the absolute indication for the interfacing element based on the scaling.

Optionally, the method comprises:
- receiving a selection of a set of user-selectable options from a plurality of user selectable options for the interfacing element, wherein each of the plurality of user selectable options have an associated action;
- receiving a selection of a haptic feedback rule from a plurality of haptic feedback rules for the interfacing element;
- receiving a selection of a layout of the interfacing element from a plurality of layouts for the interfacing element; and
- re-configuring the interfacing element, based on the received selection to provide the set of user-selectable options and haptic feedback to a user within the selected layout.

More optionally, the method further comprises:
- receiving a selection of a new action associated with a user selectable option of the interfacing element, wherein the new action is different from an old action associated with the user selectable option; and
- re-configuring the user selectable option of the interfacing element based on the received selection.

### DETAILED DESCRIPTION OF THE DRAWINGS

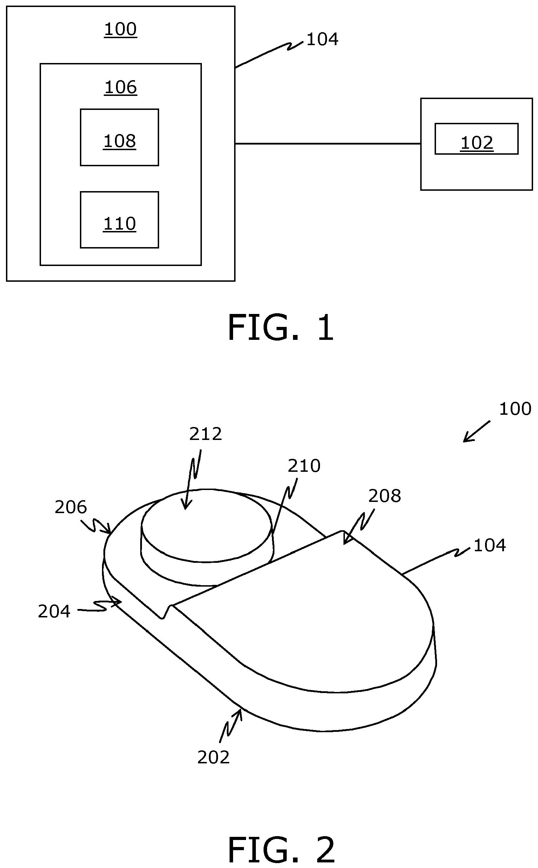

Referring to FIG. 1, there is shown a block diagram of a pointing device **100,** in accordance with an embodiment of the present disclosure. The pointing device **100** may receive user input for a computing system **102.** The pointing device **100** comprises a chassis **104.** The chassis **104** comprises a radial portion (not shown in FIG. 1) having a top-outer surface (not shown in FIG. 1). The chassis **104** further comprises a control module **106** arranged within the chassis **104.** The control module **106** comprises a sensor module **108** and a touch-sensitive surface **110.**

In operation, the sensor module **108** is configured to receive a user indication from a user of the pointing device **100.** Moreover, the touch-sensitive surface **110** is configured to be operated from the top-outer surface of the radial portion. The control module **106** is configured to determine the user indication based on a release of a user contact from the touch-sensitive surface **110.** In other words, the control module **106** is configured to determine the user indication when the user un-touches the touch-sensitive surface **110.** Moreover, the user indication corresponds to a user input for the computing system **102.**

Referring to FIG. 2, there is shown a perspective view of a pointing device **100,** in accordance with an embodiment of the present disclosure. The pointing device **100** may receive user input for a computing system (not shown in FIG. 2). The pointing device **100** comprises a chassis **104.** The chassis **104** forms an enclosure for the pointing device **100.** The chassis **104** may have a base **202,** a pair of longitudinal sides (depicted as a longitudinal side **204),** a pair of lateral sides (depicted as a lateral side **206),** and a top surface **208.**

The chassis **104** comprises a radial portion **210** having a top-outer surface **212.** As shown in FIG. 2, the radial portion **210** is cylindrical, wherein the radial portion is provided at top surface **208** of the chassis **104.** In this regard, the radial portion **210** may protrude from the top surface **208** of the chassis **104.**

The chassis **104** further comprises a control module (not shown in FIG. 2) arranged within the chassis **104.** The control module (such as the control module **106)** comprises a sensor module (not shown in FIG. 2) and a touch-sensitive surface (not shown in FIG. 2). In an example, the sensor module (such as the sensor module **108)** includes a touch sensor that implements the touch-sensitive surface (such as the touch-sensitive surface **110).** Moreover, the touch-sensitive surface is disposed below the top-outer surface **212** of the radial portion **210.**

In other embodiments of the present disclosure, the radial portion **210** may protrude from a side, such as the longitudinal side **204** or lateral side **206** of the chassis. In such a case, the touch sensitive surface may be operated by a side-outer surface of the radial portion **210.**

In operation, the sensor module is configured to receive a user indication from a user of the pointing device **100.** Moreover, the touch-sensitive surface is configured to be operated from the top-outer surface of the radial portion **210.** The control module is configured to determine the user indication based on a release of a user contact from the touch-sensitive surface. Moreover, the user indication corresponds to a user input for the computing system.

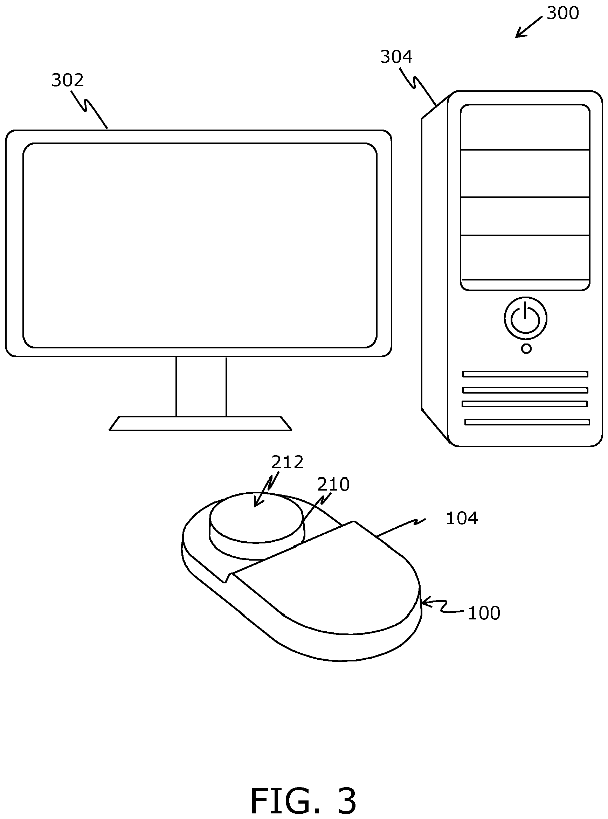

FIG. 3 is a schematic illustration of a computing system **300,** in accordance with an embodiment of the present disclosure. The computing system **300** comprises a display device **302,** a pointing device **100** operatively coupled to the display device **302,** and a processing unit **304** coupled to the display device **302** and the pointing device **100.**

The pointing device **100** comprises a chassis **104** comprising a radial portion **210** comprising a top-outer surface **212.** Moreover, the pointing device **100** comprises a control module (not shown in FIG. 3) arranged within the chassis **104.** The control module (such as the control module **106)** comprises a sensor module (not shown in FIG. 3). and a touch-sensitive surface (not shown in FIG. 3). In an example, the sensor module (such as the sensor module **108)** may include a touch sensor. Moreover, the touch-sensitive surface (such as the touch-sensitive surface **110)** may be disposed below the radial portion **210** of the chassis **104.**

In operation, the touch-sensitive surface is configured to be operated. For example, by user contact, from the top-outer surface **212** of the radial portion **210.** Subsequently, the sensor module is configured to receive a user indication based on the user contact. The control module is configured to determine the user indication based on a release of the user contact from the touch-sensitive surface. the user indication corresponds to a user input.

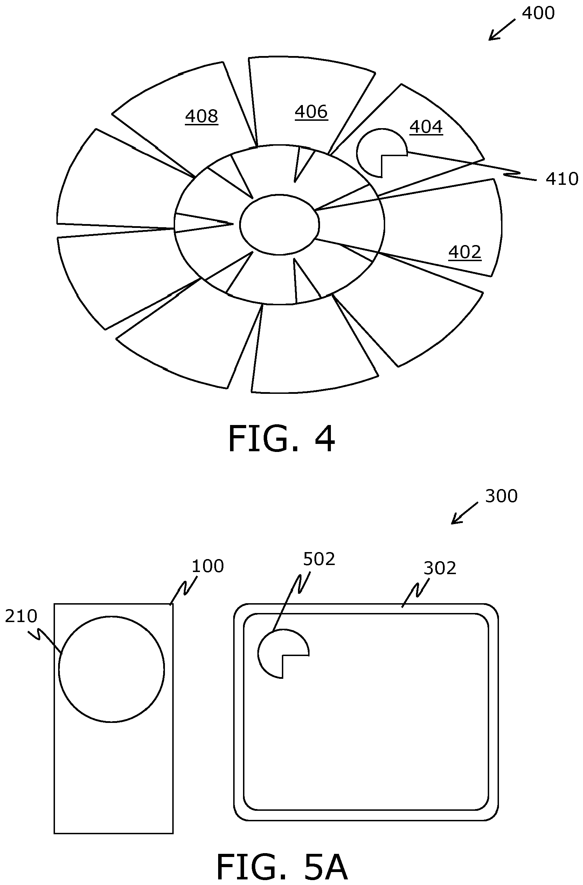

FIG. 4 is an exemplary illustration of an interfacing element **400,** in accordance with an embodiment of the present disclosure. The interfacing element **400** is to be maintained on a user interface. The interfacing element **400** shown in FIG. 4 corresponds to an activated state of the interfacing element **400.** The interfacing element **400** may be activated on sensing a user contact on a touch-sensitive surface (such as the touch-sensitive surface **110)** of a pointing device (such as the pointing device **100).**

The interfacing element **400** provides a set of user selectable options (depicted as user selectable options **402, 404, 406,** and **408).** The user selectable options **402, 404, 406,** and **408** may correspond to a software application associated with the user interface on which the interfacing element **400** is maintained. The interfacing element **400** also comprises an icon **410.**

FIGS. 5A-5C are exemplary environment for operation of a computing system **300** including a pointing device **100** for receiving a user input, in accordance with an embodiment of the present disclosure. An interfacing element is maintained on a display device of **302** of the computing system **300.** The interfacing element corresponds to the pointing device **100.** In an example, the interfacing element may be operated by operating a radial portion **210** of the pointing device **100.** It may be noted that touch-sensitive surface is disposed below the radial portion **210.**

Referring the FIG. 5A, an icon **502** is only displayed in a deactivated state. For example, the interfacing element (not shown in FIG. 5A) may be in the deactivated state due to no user contact on the radial portion **210** of the pointing device **100.**

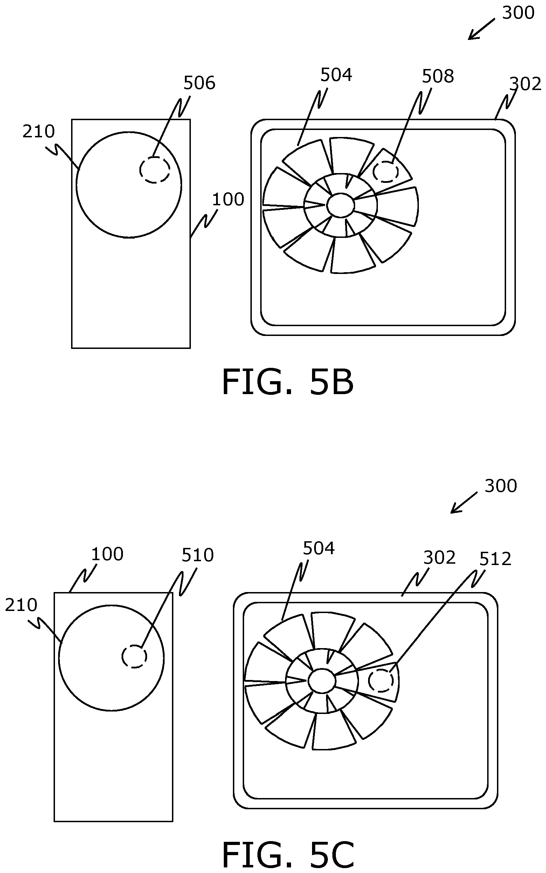

Referring the FIG. 5B, an interfacing element **504** is in an activated state. In an example, the interfacing element **504** may be activated on detecting or sensing a user contact **506** on the radial portion **210** of the pointing device **100.** The activated interfacing element **504** provides a set of user selectable options (such as user selectable options **402, 404, 406,** and **408).** Furthermore, the activated interfacing element **504** comprises a pointer **508,** wherein a location of the pointer **508** corresponds to a location of the user contact **506** on the radial portion **210.**

Referring the FIG. 5C, a user indication **510** is determined on the radial portion **210** of the pointing device **100.** The user indication **510** is determined when a user releases the user contact from the radial portion **210.** After receiving the user indication **510,** coordinates of the user indication **510** is mapped to coordinates of an activated interfacing element **504.** Subsequently, a user-selectable option **512** on the interfacing element corresponding to the user indication **510** is identified. The user indication **510** may correspond to user input for the computing system **300.** The computing system **300** may perform an action associated with the user selectable option corresponding to the user indication **510** on the radial portion **210.**

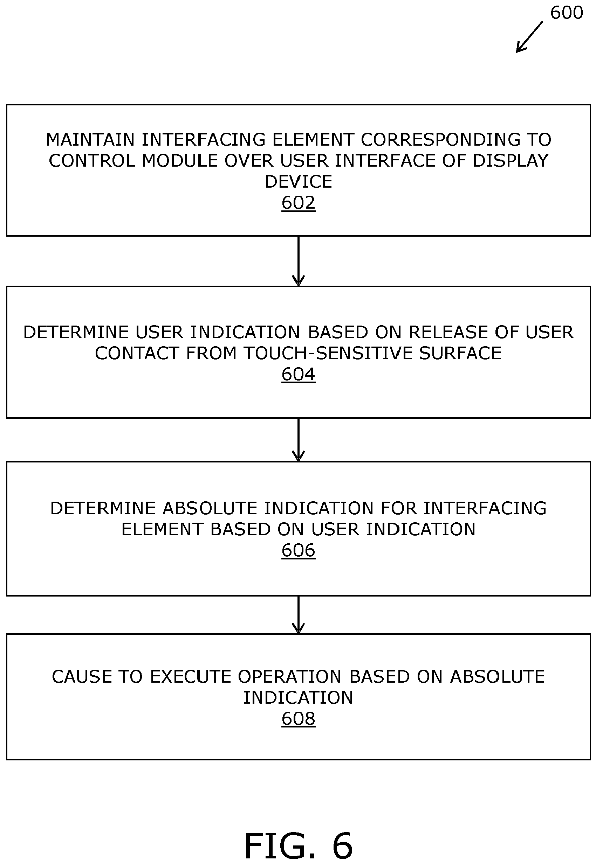

Referring to FIG. 6, there is shown an illustration of steps of a method **600** for receiving a user input at a computing system, in accordance with an embodiment of the present disclosure. The computing system comprises a display device, a pointing device operatively coupled to the display device and a processing unit coupled to the display device and the pointing device. The pointing device comprises a chassis and a control module arranged within the chassis. The control module comprises a sensor module and a touch-sensitive surface enabled by the sensor module to receive a user indication.

At step **602,** an interfacing element corresponding to the control module of the pointing device is maintained over a user interface of the display device of the computing system. At step **604,** the user indication is determined based on release of a user contact from the touch-sensitive surface. The user indication corresponds to a user input. At step **606,** an absolute indication for the interfacing element is determined based on the user indication. The absolute indication corresponds to the user input. At step **608,** an operation is executed based on the absolute indication. The steps **602** to **608** are only illustrative and other alternatives can also be provided where one or more steps are added, one or more steps are removed, or one or more steps are provided in a different sequence without departing from the scope of the claims herein.

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural.

## Claims

1. A pointing device (100) for a computing system (102, 300), the pointing device (100) comprising:
- a chassis (104) comprising
- a radial portion (210) comprising a top-outer surface (212), and
- a control module (106) arranged within the chassis (104), the control module (106) comprising:
- a sensor module (108), and
- a touch-sensitive surface (110),
wherein the sensor module (108) is configured to receive a user indication (510), and the touch-sensitive surface (110) is configured to be operated from the top-outer surface (212) of the radial portion (210),
wherein the control module (106) is configured to determine the user indication (510) based on a release of a user contact (506) from the touch-sensitive surface (110), the user indication (510) is corresponding to a user input for the computing system (102, 300).

2. A pointing device (100) of the claim 1, wherein the computing system (102, 300) is configured to maintain an interfacing element (400, 504) corresponding to the control module (106).

3. A pointing device (100) of the claim 2, wherein the computing system (102, 300) is further configured to:
- scale coordinates of the interfacing element (400, 504) based on coordinates of the touch-sensitive surface (110); and
- maintain the interfacing element (400, 504) over a user interface of the computing system (102, 300).

4. A pointing device (100) of any of the claims 2 or 3, wherein the computing system (102, 300) is further configured to:
- receive the user indication (510) from the control module (106);
- determine an absolute indication for the interfacing element (400) based on the user indication (510), wherein the absolute indication corresponds to the user input; and
- cause to execute an operation based on the absolute indication.

5. A pointing device (100) of any of the preceding claims, wherein the user indication (510) is a gesture input.

6. A pointing device (100) of any of the preceding claims, wherein the control module (106) is configured to provide a haptic feedback to a user via the touch-sensitive surface (110).

7. A pointing device (100) of claim 2, the pointing device (110) further comprising at least one button configured to realign the interfacing element (400, 504) in a pre-defined manner on triggering the at least one button.

8. A pointing device (100) of any of the preceding claims, wherein the sensor module (108) comprises at least one of selected from: a tactile sensor, a touch sensor, a key-switch, a slider encoder, an accelerometer, a gyro sensor, a voice recognition sensor, a haptic sensor, a piezo electric sensor, a vibrator.

9. A computing system (102, 300) comprising:
- a display device (302);
- a pointing device (100) operatively coupled to the display device (302), the pointing device (100) comprising
- a chassis (104) comprising
- a radial portion (210) comprising a top-outer surface (212), and
- a control module (106) arranged within the chassis (104), the control module (106) comprising:
- a sensor module (108), and
- a touch-sensitive surface (110),
wherein the sensor module (108) is configured to receive a user indication (510), and the touch-sensitive surface (110) is configured to be operated from the top-outer surface (212), wherein the control module (106) is configured to determine the user indication (510) based on a release of a user contact (506) from the touch-sensitive surface (110), and wherein the user indication (510) corresponds to a user input; and
- a processing unit (304) coupled to the display device (302) and the pointing device (100), wherein the processing unit (304) is configured to:
- maintain an interfacing element (400, 504) corresponding to the control module (106) over a user interface of the display device (302) ;
- receive the user indication (510) from the control module (106);
- determine an absolute indication for the interfacing element (400, 504) based on the user indication (510), wherein the absolute indication corresponds to the user input; and
- cause to execute an operation based on the absolute indication.

10. A computing system (102, 300) of the claim 9, wherein the processing unit (304) is further configured to activate the interfacing element (400, 504) on determining the user contact (506) at the touch-sensitive surface (110).

11. A computing system (102, 300) of the claim 10, wherein the activated interfacing element (400, 504) is configured to provide a set of user-selectable options (402, 404, 406, 408, 512).

12. A computing system (102, 300) of claim 10, wherein the processing unit (304) is further configured to:
- scale coordinates of each of the set of user selectable options (402, 404, 406, 408, 512) provided by the interfacing element (400, 504) based on coordinates of the touch-sensitive surface (110); and
- transform the user indication (510) into the absolute indication for the interfacing element (400, 504) based on the scaling.

13. A computing system (102, 300) of any of the claims 9-12, wherein the processing unit (304) is further configured to:
- transform the user contact (506) at the touch-sensitive surface (110) into absolute movement across the interfacing element (400, 504) based on the scaling; and
- cause the display device (302) to display the absolute movement.

14. A computing system (102, 300) of any of the claims 9-13, wherein the processing unit (304) is further configured to cause the control module (106) to provide a haptic feedback to a user.

15. A computing system (102, 300) of any of the claims 9-14, wherein the processing unit (304) is further configured to:
- receive a selection of a set of user-selectable options (402, 404, 406, 408) from a plurality of user selectable options for the interfacing element (400, 504), wherein each of the plurality of user selectable options have an associated action;
- receive a selection of a haptic feedback rule from a plurality of haptic feedback rules for the interfacing element (400, 504);
- receive a selection of a layout of the interfacing element (400, 504) from a plurality of layouts for the interfacing element; and
- re-configure the interfacing element (400, 504) based on the received selection.

16. A computing system (102, 300) of any of the claims 9-15, wherein the processing unit (304) is further configured to:
- receive a selection of a new action associated with a user selectable option (402, 404, 406, 408) of the interfacing element (400, 504), wherein the new action is different from an old action associated with the user selectable option (402, 404, 406, 408); and
- re-configure the user selectable option (402, 404, 406, 408) of the interfacing element (400, 504) based on the received selection.

17. A method (600) for receiving a user input at a computing system (102, 300), the computing system (102, 300) comprising
- a display device (302);
- a pointing device (100) operatively coupled to the display device (302), the pointing device (100) comprising
- a chassis (104) and
- a control module (106) arranged within the chassis (104); and
- a processing unit (304) coupled to the display device (302) and the pointing device (100),
wherein the method (600) comprises:
- maintaining (602) an interfacing element (400, 504) corresponding to the control module (106) over a user interface of the display device (302), wherein the control module (106) comprises a sensor module (108) and a touch-sensitive surface (110) enabled by the sensor module (108) to receive a user indication (510);
- determining (604) the user indication (510) based on release of a user contact (506) from the touch-sensitive surface (110), wherein the user indication (510) corresponds to a user input;
- determining (606) an absolute indication for the interfacing element (400, 504) based on the user indication (510), wherein the absolute indication corresponds to the user input; and
- causing (608) to execute an operation based on the absolute indication.

18. A method (600) of the claim 17, wherein determining the absolute indication for the interfacing element (400, 504) comprises:
- scaling coordinates of the interfacing element (400, 504) based on coordinates of the touch-sensitive surface (110); and
- transforming the user indication (510) into the absolute indication for the interfacing element (400, 504) based on the scaling.

19. A method (600) of any of the claims 17 or 18, wherein the method comprises:
- receiving a selection of a set of user-selectable options (402, 404, 406, 408, 512) from a plurality of user selectable options for the interfacing element (400, 504), wherein each of the plurality of user selectable options have an associated action;
- receiving a selection of a haptic feedback rule from a plurality of haptic feedback rules for the interfacing element (400, 504);
- receiving a selection of a layout of the interfacing element (400, 504) from a plurality of layouts for the interfacing element (400, 504); and
- based on the received selection, re-configuring the interfacing element (400, 504) to provide the set of user-selectable options (402, 404, 406, 408, 512) and haptic feedback to a user within the selected layout.

20. A method (600) of any of the preceding claims, wherein the method further comprises:
- receiving a selection of a new action associated with a user selectable option (402, 404, 406, 408, 512) of the interfacing element (400, 504), wherein the new action is different from an old action associated with the user selectable option; and
- re-configuring the user selectable option (402, 404, 406, 408, 512) of the interfacing element (400, 504) based on the received selection.
